# EUROPÄISCHE PATENTSCHRIFT

(11) **EP 2 114 742 B1**
(45) Veröffentlichungstag und Bekanntmachung des Hinweises auf die Patenterteilung: **04.05.2011**
(21) Anmeldenummer: 08717349.8
(22) Anmeldetag: 04.03.2008
(51) Int. Cl.: B61D 27/00, B61C 17/04, B60H 1/00

(54) **VORRICHTUNG ZUR VORBEHANDLUNG VON LUFT FÜR EIN KLIMAGERÄT EINES SCHIENENFAHRZEUGES**
DEVICE FOR THE PRETREATMENT OF AIR FOR AN AIR CONDITIONING DEVICE OF A RAIL VEHICLE
PROCÉDÉ POUR PRÉTRAITER L'AIR POUR UN APPAREIL DE CLIMATISATION DE VÉHICULE SUR RAILS

(30) Priorität: 06.03.2007 DE 102007011452
(43) Veröffentlichungstag der Anmeldung: 11.11.2009
(73) Patentinhaber: Siemens Aktiengesellschaft, 80333 München (DE)
(72) Erfinder: SCHÜTZ, Winfried, 82140 Olching (DE)
(86) Internationale Anmeldenummer: PCT/EP2008/052586
(87) Internationale Veröffentlichungsnummer: WO 2008/107429

(56) Entgegenhaltungen:
- EP-A- 0 125 562
- EP-A- 0 700 818
- US-A- 5 911 624

## Beschreibung

Die Erfindung betrifft eine Vorrichtung zur Vorbehandlung von Luft für den Innenraum eines Führstandes eines schienengeführten Triebfahrzeuges, wie in der US 5 911 624 A beschrieben.

Eine solche Vorrichtung ist beispielsweise auch aus der DE 698 11 821 T2 bekannt. Die dort beschriebene Vorrichtung dient zur Vorbehandlung von Luft zur Belüftung eines Motorraumes eines Fahrzeuges, wobei die zur Belüftung eingesetzte Luft gefiltert wird. Zum Filtern sind ein so genannter Zyklon-Abscheider und eine dem Zyklon-Abscheider nachgeordnete Filtereinheit vorgesehen.

In der DE 689 05 389 T2 ist ein Luftfilterersatz für ein Fahrzeug beschrieben, der ebenfalls einen Zyklon-Abscheider umfasst. Zyklon-Abscheider und Filtereinrichtungen dienen auch hier zur Reinigung der Luft, die anschließend zur Kühlung oder Klimatisierung eingesetzt wird.

Aus der DE 20 2004 020 167 U1 ist ein Klimagerät für ein Schienenfahrzeug bekannt geworden.

An Vorrichtungen zur Vorbehandlung von Luft, die in Schienenfahrzeugen eingesetzt werden, werden je nach Einsatzort des Schienenfahrzeuges die unterschiedlichsten Anforderungen gestellt. So ist die Außenluft bei Kohlezügen in der Regel sehr staubhaltig, so dass ein hohes Gewicht auf die Filterung der Luft gelegt wird, die nach ihrer Reinigung einer raumlufttechnischen Anlage zugeführt wird. In nördlichen Ländern müssen hingegen wirkungsvolle Vorkehrungen getroffen werden, um auch bei Dauerfrost die Funktionsweise der Luftvorbehandlungsvorrichtung sicher zustellen.

Der Vorrichtung der eingangs genannten Art haftet der Nachteil an, dass diese nur aufwändig an die jeweils geltenden Anforderungen angepasst werden kann. Insbesondere bei Schienenfahrzeugen, in denen ein nur begrenzter Bauraum zur Verfügung steht, hat die unterschiedliche Auslegung der Vorrichtung weit reichende Folgen hinsichtlich der Auslegung des Schienenfahrzeuges selbst. Diese von den Anforderungen abhängige Auslegung ist jedoch kostenintensiv.

Aufgabe der Erfindung ist es daher eine Vorrichtung der eingangs genannten Art bereitzustellen, die aufwandsarm an unterschiedliche Anforderungen angepasst werden kann, wobei gleichzeitig nahezu keine Änderungen bei der Auslegung des Schienenfahrzeugs vorgenommen werden müssen.

Die Erfindung löst diese Aufgabe durch eine Vorrichtung zur Vorbehandlung von Luft für ein Klimagerät für den Innenraum eines Führerstandes eines schienengeführten Triebfahrzeuges mit einem Lufteingangsgehäuse, das eine Außenluftöffnung und eine Klimageräteöffnung mit Mitteln zum Befestigen des Lufteingangsgehäuses an einem Klimagerät aufweist, wobei ein Außenluftkanal, zum Verbinden des Lufteingangsgehäuses mit dem Klimagerät eingerichtet ist, und mit einem separaten Luftausgangsgehäuse, das über eine Fortluftöffnung verfügt und das über einen Fortluftkanal mit dem Innenraum und/oder dem Klimagerät verbunden ist, wobei sich ein den Außenluftkanal überbrückender Bypasskanal zwischen dem Klimagerät und der Klimageräteöffnung erstreckt, in dem eine mit einem Stellmotor verbundene Luftklappe angeordnet ist, und wobei das Lufteingangsgehäuse aus einem formstabilen Material besteht, so dass feste Schnittstellen der Vorrichtung zum Klimagerät und zur Außenwand des Triebfahrzeuges definiert sind.

Erfindungsgemäß ist ein formstabiles Lufteingangsgehäuse bereitgestellt. Das formstabile Lufteingangsgehäuse verfügt über eine Außenluftöffnung, die den Eintritt von Außenluft ermöglicht. Ferner ist eine Klimageräteöffnung bereitgestellt, an der ein Klimagerät befestigt werden kann. Aufgrund der formstabilen Ausgestaltung des Lufteingangsgehäuses sind auf diese Weise zwei Schnittstellen, und zwar einmal mit der Außenseite des Triebfahrzeuges und zum anderen mit dem Klimagerät, bereitgestellt, wobei zwischen diesen beiden Schnittstellen beliebige Zusatzgeräte eingesetzt werden können. Die Formstabilität des Lufteingangsgehäuses ermöglicht somit einen standardisierten Einbau der Vorrichtung in das Triebfahrzeug unabhängig vom Einsatzort des Triebfahrzeuges beziehungsweise den jeweils herrschenden Anforderungen. Die Vorrichtung ist somit modular erweiterbar, wobei die Zusatzbauteile mit dem Lufteingangsgehäuse kommunizieren.

Zweckmäßigerweise verfügt der Außenluftkanal über eine Filtereinheit und einen Zusatzlüfter. Durch die Aufnahme dieser beiden Bauteile in den Außenluftkanal kann die Funktion der erfindungsgemäßen Vorrichtung erweitert werden, ohne dass Änderungen an den Schnittstellen und somit Änderungen an dem Gesamtaufbau der erfindungsgemäßen Vorrichtung vorgenommen werden müssen. Darüber hinaus brauchen auch die mit der Vorrichtung zusammenwirkenden Bauteile, beispielsweise das in dem Triebfahrzeug vorgesehene Klimagerät nicht verändert werden.

Gemäß einer diesbezüglich zweckmäßigen Weiterentwicklung sind Zusatzlüfter und Filtereinheit an dem Lufteingangsgehäuse befestigt. Aufgrund der formstabilen Ausgestaltung des Lufteingangsgehäuses weist diese die notwendige Festigkeit auf, um Zusatzlüfter und Filtereinheit zu tragen. Auf diese Weise ist ein kompakter Aufbau bereitgestellt, so dass der Bauraum, der in dem Triebfahrzeug für die erfindungsgemäße Vorrichtung bereitgehalten werden muss, minimiert ist.

Vorteilhafterweise weist das Lufteingangsgehäuse Mittel zum Befestigen an dem Triebfahrzeug auf. Die Mittel zum Befestigen sind beispielsweise im Bereich der besagten festen Schnittstelle mit dem Triebfahrzeug vorgesehen. Das Triebfahrzeug kann somit auch bei unterschiedlichen Anforderungen an die Luftvorbehandlungsvorrichtung immer gleich ausgelegt werden. Nach der Befestigung des Lufteingangsgehäuses am Triebfahrzeug kann die Vorrichtung mit den notwendigen Bauteilen bestückt werden und somit das fertig montierte Triebfahrzeug, ohne besondere bauliche Zusatzmaßnahmen vornehmen zu müssen, an den jeweiligen Anwendungsfall angepasst werden.

Vorteilhafterweise ist auch das Luftausgangsgehäuse aus einem formstabilen Material gefertigt. Gemäß dieser zweckmäßigen Weiterentwicklung ist auch für das Luftausgangsgehäuse eine feste Schnittstelle zumindest mit der Außenwand des Triebfahrzeugs bereitgestellt. Darüber hinaus kann nunmehr auch das Luftausgangsgehäuse als Gerüst zur Befestigung weiterer Bauteile dienen.

Darüber hinaus bildet der Fortluftkanal ebenfalls eine feste Schnittstelle mit dem Innenraum beziehungsweise mit dem Klimagerät aus.

Vorteilhafterweise weist der Fortluftkanal eine Fortluftklappe mit einem Stellmotor auf, wobei ein Überbrückungskanal mit einem Druckschutzventilator die Fortluftklappe überbrückt. Durch den Einsatz eines Druckschutzventilators auf der Fortluftseite und der verstellbaren Fortluftklappe ist ein Druckschutz bereitgestellt, der zur Vermeidung hoher Druckschwankungen im Innenraum des Triebfahrzeuges dient. Der Druckschutzventilator arbeitet hierbei zweckmäßigerweise mit dem Zusatzlüfter auf der Lufteingangsseite zusammen und wird mittels eines separaten Schalters in Betrieb gesetzt oder ausgeschaltet. Dabei fördert der Zusatzlüfter auf der Lufteingangsseite gegen den Druckschutzventilator auf der leicht gedrosselten Fortluftseite. Durch die steile Kennlinie beider Lüfter werden mögliche Druckschwankungen im Innenraum zur Außenatmosphäre in der Kennlinie beider Lüfter geschluckt.

Zweckmäßigerweise mündet der Außenluftkanal zwischen dem Klimagerät und der Luftklappe in einen Bypasskanal. Gemäß dieser zweckmäßigen Weiterentwicklung ist kein zusätzlicher Kanal mehr vorzusehen, der von dem Lufteingangsgehäuse in das Klimagerät mündet. Die erfindungsgemäße Vorrichtung ist demnach kostengünstiger.

Zweckmäßigerweise umfasst die Filtereinheit einen Zyklon-Abscheider und einen Feinpartikelfilter. Solche Kombinationsfilter sind aus dem Stand der Technik bereits bekannt geworden, so dass hier an dieser Stelle nicht detailliert hierauf eingegangen zu werden braucht.

Vorteilhafterweise ist ein Wetterschutzgitter an der Außenluftöffnung und/oder der Fortluftöffnung vorgesehen.

Zweckmäßigerweise ist wenigstens eines der Wetterschutzgitter beheizbar. Beheizbare Wetterschutzgitter dienen dazu, in kalten Gegenden das Zufrieren des Wetterschutzgitters zu vermeiden, so dass die Belüftung des Innenraums des Triebfahrzeuges auch bei Frost gewährleistet bleibt. Aufwändige CO₂-Melder im Innenraum sind gemäß dieser vorteilhaften Weiterentwicklung überflüssig geworden. Die ständige Versorgung des Innenraums mit Sauerstoff ist auch bei tiefen Temperaturen sichergestellt.

Zweckmäßigerweise weist der Zusatzlüfter eine nahezu konstante Kennlinie in Abhängigkeit des statischen Druckes auf, so dass die Anordnung des Lufteingangsgehäuses an der Frontseite des Triebfahrzeuges ermöglicht ist. Durch die Anordnung des Lufteingangsgehäuses an der Frontseite entsteht aufgrund der Fahrgeschwindigkeit des Triebfahrzeuges ein Druckstau, dessen Höhe von der Höhe der Geschwindigkeit abhängig ist. Der Zusatzlüfter stellt gemäß dieser zweckmäßigen Weiterentwicklung eine solche Förderleistung bereit, dass auch bei höheren Geschwindigkeiten des Triebfahrzeuges eine sichere Luftversorgung des Innenraums ermöglicht ist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung mit einem Klimagerät,
- Figur 2: ein weiteres Ausführungsbeispiel der erfin- dungsgemäßen Vorrichtung,
- Figur 3: ein weiteres Ausführungsbeispiel der erfin- dungsgemäßen Vorrichtung,
- Figur 4: ein weiteres Ausführungsbeispiel der erfin- dungsgemäßen Vorrichtung, das am Frontende des Triebfahrzeuges eingebaut ist und
- Figuren 5 bis 8: weitere Ausführungsbeispiele der erfindungsge- mäßen Vorrichtung in schematischer Darstellung zeigen.

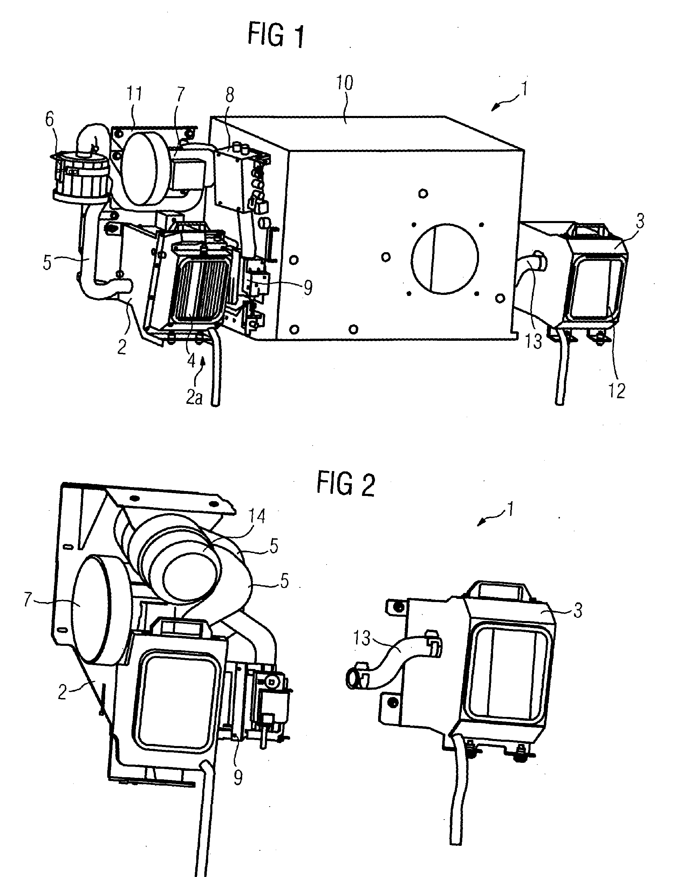

Figur 1 zeigt ein Ausführungsbeispiel der erfindungsgemäßen Vorrichtung 1, die ein formfestes Lufteingangsgehäuse 2 sowie ein formstabiles Luftausgangsgehäuse 3 umfasst. Das Lufteingangsgehäuse 2 weist eine Außenluftöffnung 2a auf, die von einem luftdurchlässigen Wetterschutzgitter 4 verdeckt ist. Vom hinteren Ende des Lufteingangsgehäuses 2 erstreckt sich ein Außenluftkanal 5 über eine Filtereinheit 6 und einen Zusatzlüfter 7 zu einem Bypasskanal 9. Der Bypasskanal 9 ist Teil des Lufteingangsgehäuses 2 und mündet in einer Klimageräteöffnung 15, an der Mittel zur Befestigung an einem Klimagerät 10 vorgesehen sind. Darüber hinaus verfügt das Lufteingangsgehäuse 2 über Mittel 11 zur Befestigung an einem Triebfahrzeug eines Schienenfahrzeuges, das in Figur 1 figürlich nicht dargestellt ist.

Das Luftausgangsgehäuse 3 begrenzt eine Fortluftöffnung 12, aus der Luft vom Innenraum eines Triebfahrzeuges an die Atmosphäre abgegeben wird. Das Luftausgangsgehäuse 3 ist über einen Fortluftkanal 13 mit dem Klimagerät 10 verbunden, wobei an der Fortluftöffnung 12 ebenfalls ein Wetterschutzgitter anbringbar ist. Die Wetterschutzgitter 4 sind in dem in Figur 1 gezeigten Ausführungsbeispiel beheizbare Wetterschutzgitter, wobei eine Steuerungseinheit 8 zum Einstellen der Heiztemperatur eingerichtet ist und die notwendige Sicherheitstechnik für die beheizbaren Wetterschutzgitter bereitstellt.

Die dargestellte Vorrichtung 1 ist zur Vorbehandlung der Außenluft vor ihrem Eintritt in das Klimagerät 10 eingerichtet. Die in das Lufteingangsgehäuse 2 eintretende Außenluft gelangt über den Außenluftkanal 5 zunächst zum Filter 6, der in dem gezeigten Ausführungsbeispiel ein Feinpartikelfilter ist. Der dabei auftretende Druckabfall der Außenluft wird durch den Zusatzlüfter 7, welcher dem Filter 6 in Richtung des Luftstromes nachgeschaltet ist, ausgeglichen. Anschließend tritt die Außenluft über den Bypasskanal 9 und die Klimageräteöffnung 15 in das Klimagerät 10 ein. Das Klimagerät 10 verfügt seinerseits über zweckmäßige Lüfter zum Befördern der Außenluft. Darüber hinaus sind selbstverständlich die zur Luftkonditionierung notwendigen Bauelemente in dem Klimagerät 10 vorgesehen. Mit anderen Worten handelt es sich bei dem Klimagerät 10 um eine raumlufttechnische Anlage, die im Innenraum eines Triebfahrzeuges eines schienengeführten Fahrzeuges die gewünschte Temperatur und die gewünschte Luftfeuchtigkeit einstellt. Die aus dem Klimagerät 10 austretende Luft gelangt zunächst in den Innenraum des Triebfahrzeugs und anschließend über den Fortluftkanal 13 in das Luftausgangsgehäuse 3 und wird schließlich an die Außenatmosphäre durch die Fortluftöffnung 12 abgegeben. Die dargestellte Vorrichtung ist zur Montage an der Frontseite des Triebfahrzeuges eingerichtet. Aufgrund des sich einstellenden Fahrtwindes kann sich an der Front des Triebfahrzeugs ein Druckstau einstellen. Der Zusatzlüfter 7 ist so bemessen, dass eine konstante Frischluftversorgung des Innenraums auch unter Berücksichtigung dieses Druckstaus ermöglicht ist.

Figur 2 zeigt ein weiteres Ausführungsbeispiel der erfindungsgemäßen Vorrichtung 1, wobei jedoch das Klimagerät aus Gründen der Übersichtlichkeit nicht mehr gezeigt ist. Die hier dargestellte Vorrichtung 1 umfasst wieder ein Lufteingangsgehäuse 2 sowie ein Luftausgangsgehäuse 3, die wiederum aus formstabilem Material gefertigt sind. Vom Lufteingangsgehäuse 2 erstreckt sich der Außenluftkanal 5 über einen Zusatzlüfter 7 und ein Kombinationsfilter 14, das aus einem Zyklon-Abscheider und einem Feinpartikelfilter besteht, zum Bypasskanal 9. Kombinationsfilter sind dem Fachmann bekannt, so dass an dieser Stelle hierauf nicht näher eingegangen zu werden braucht. Die figürlich in Figur 2 nicht dargestellten Wetterschutzgitter vor der Außenluftöffnung 2a und vor der Fortluftöffnung 12 sind in diesem gezeigten Ausführungsbeispiel nicht beheizbar, da das Schienenfahrzeug zum Betrieb in südlichen Ländern vorgesehen ist, in denen kein Frost auftritt.

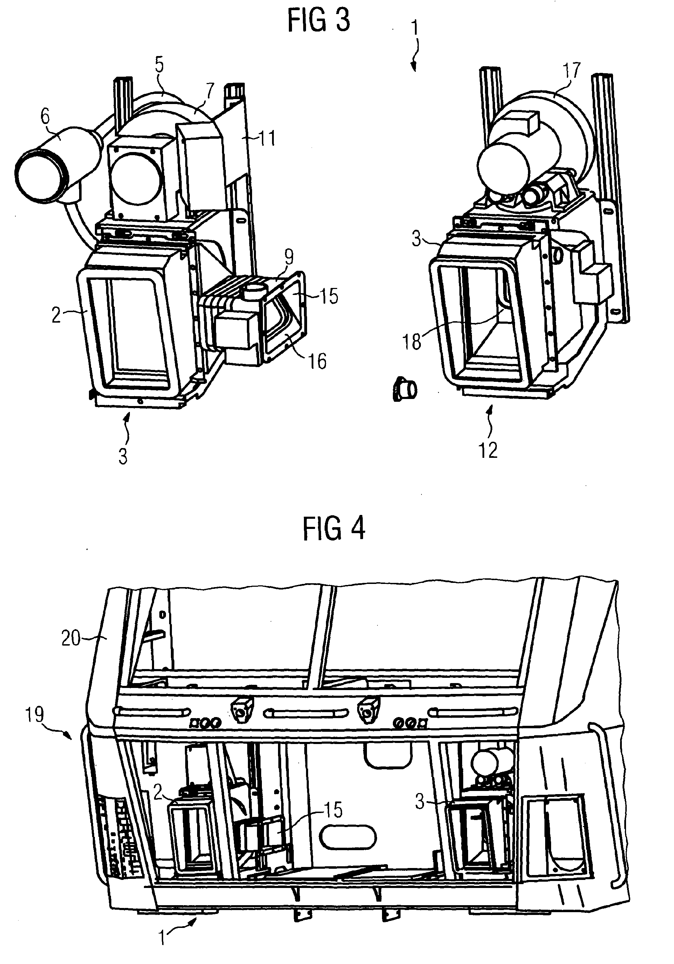

Figur 3 zeigt ein weiteres Ausführungsbeispiel der erfindungsgemäßen Vorrichtung 1 ohne das Klimagerät 10. Wieder ist das formstabile Lufteingangsgehäuse 2 sowie das ebenfalls formstabile Luftausgangsgehäuse 3 erkennbar, wobei der Außenluftkanal 5 wiederum über die Filtereinheit 6 und den Zusatzlüfter 7 in den Bypass-Kanal 9 mündet, der eine Klimageräteöffnung 15 begrenzt, an der Mittel zur Befestigung an dem Klimagerät 10 vorgesehen sind. Darüber hinaus ist in Figur 3 eine Luftklappe 16 erkennbar, mit der der Bypass-Kanal 9 für die in die Außenluftöffnung 3 eintretende Außenluft verschlossen werden kann. Aufgrund der Luftklappe 16 wird die Außenluft daher gezwungen über den Außenluftkanal 5, die Filtereinheit 6 und den Zusatzlüfter 7 zu strömen, bevor sie hinter der Luftklappe 16 in den Bypasskanal 9 eintritt, um über die Klimageräteöffnung 15 in das nicht dargestellte Klimagerät 10 zu gelangen.

Ferner ist erkennbar, dass das Lufteingangsgehäuse 2 mit Mitteln zur Befestigung an dem Triebfahrzeug ausgerüstet ist. Hierbei handelt es sich um eine einfache Flanschverbindung. Darüber hinaus verfügt die erfindungsgemäße Vorrichtung 1 gemäß Figur 3 über einen Druckschutzventilator 17, der in einem figürlich nicht dargestellten Überbrückungskanal angeordnet ist. Der Überbrückungskanal dient zur Überbrückung einer Fortluftklappe 18, wobei je nach Stellung der Fortluftklappe 18 die aus dem Innenraum des Schienenfahrzeuges austretende Fortluft entweder über den Druckschutzventilator 17 geführt wird oder direkt aus dem Innenraum zur Fortluftöffnung 12 gelangt.

Figur 4 zeigt ein Ausführungsbeispiel der erfindungsgemäßen Vorrichtung 1 im eingebauten Zustand, wobei sie an der Frontseite 19 eines Triebwagens 20 eines Schienenfahrzeuges angeordnet ist. Es ist erkennbar, dass das Triebfahrzeug einen nur begrenzten Bauraum zur Verfügung stellt. Die erfindungsgemäße Vorrichtung 1 kann jedoch in beliebiger Bestückung bei gleich bleibender Anordnung des Lufteingangsgehäuses 2 und des Luftausgangsgehäuses 3 zur Vorbehandlung der Luft eingebaut werden. Mit anderen Worten ist die erfindungsgemäße Vorrichtung 1 bei begrenztem Bauraum modular erweiterbar und bietet somit eine Plattform für unterschiedlichste Anforderungen im Bereich der Klimatechnik.

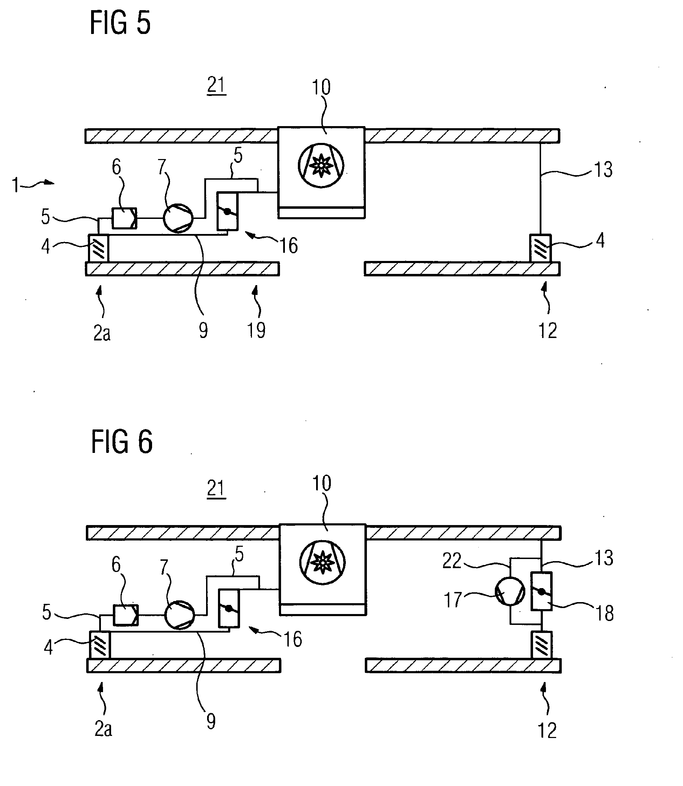

Die Figuren 5 bis 8 verdeutlichen in einer schematischen Darstellung die verschiedenen Ausführungsbeispiele, insbesondere hinsichtlich ihrer Wirkungsweise. Es ist erkennbar, dass die Außenluft durch die Außenluftöffnung 2a des figürlich nicht dargestellten Lufteingangsgehäuses in dieses über das Wetterschutzgitter 4 eintritt. Von da aus gelangt die Außenluft aufgrund der verschlossenen Luftklappe 16 über den Außenluftkanal 5, den Filter 6 und den Zusatzlüfter 7 in den Bypass-Kanal 9, der mit seiner Klimageräteöffnung 15 in das Klimagerät 10 mündet. Das figürlich ebenfalls nicht dargestellte Luftausgangsgehäuse ist über den Fortluftkanal 13 mit dem Innenraum 21 des Triebfahrzeuges verbunden, wobei der Zusatzlüfter 7 eine solche Förderleistung bereitstellt, dass ein sich aufgrund des Fahrtwindes ergebener Druckstau bei der Abgabe der Fortluft an die Außenatmosphäre über die Fortluftöffnung 12 überwunden wird. Die Luftklappe 16 dient dazu, im Bedarfsfall, beispielsweise bei Stillstand des Triebfahrzeuges, Luft aus dem Innenraum des Fahrzeuges 21 auch über das Lufteingangsgehäuse 4 an die Außenatmosphäre abzugeben, wobei Lüfter des Klimagerätes 10 die notwenige Förderleistung bereitstellen. Gemäß dieser Ausgestaltung werden in der Bahntechnik geltende Normen erfüllt.

Figur 6 zeigt eine Vorrichtung gemäß Figur 5, die jedoch auf der Fortluftseite an dem figürlich nicht dargestellten Luftausgangsgehäuse eine Fortluftklappe 18 in dem Fortluftkanal 13 aufweist, wobei ein die Fortluftklappe 18 überbrückender Überbrückungskanal 22 vorgesehen ist, in dem der Druckschutzventilator 17 angeordnet ist. Der Druckschutzventilator 17 und die Fortluftklappe 18 sind mit einem zweckmäßigen Bedienschalter verbunden, die Druckschwankungen im Innenraum 21 des Triebfahrzeuges verhindern. Das Schließen der Lüftungsklappen 16 und 18 und das Laufen der Lüfter 7 und 18 erfolgt gleichzeitig, wobei der Zusatzlüfter 18 leicht gedrosselt ist. Durch die steile Kennlinie beider Zusatzlüfter kann eine Druckschwankung im Innenraum 21, bei Druckschwankungen der Außenatmosphäre sicher vermieden werden. Die Funktion Druckschutz wird über eine Steuereinheit in Betrieb gesetzt und ist nicht dargestellt.

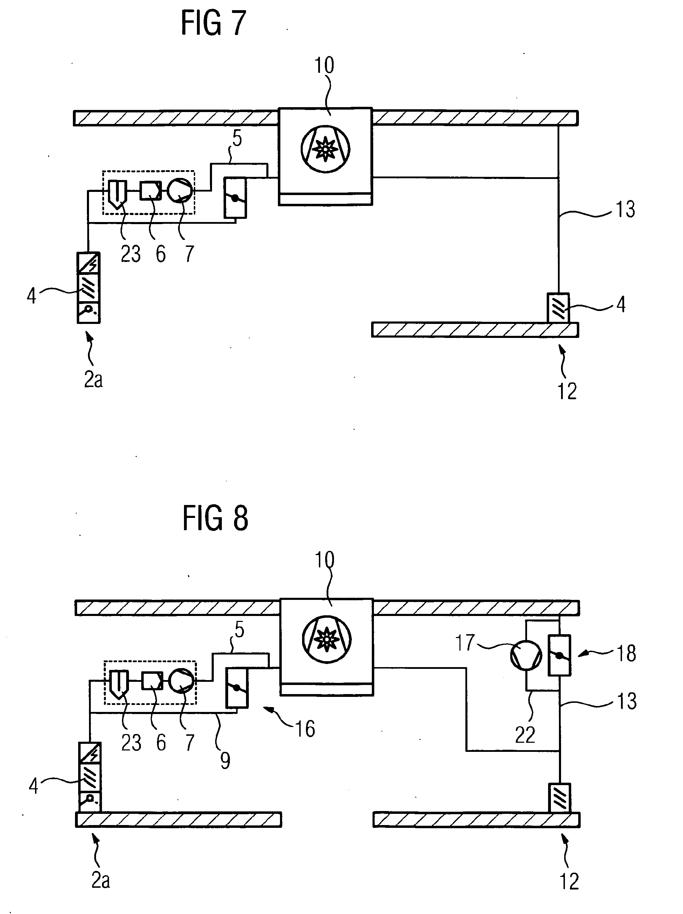

Figur 7 zeigt ein Ausführungsbeispiel der erfindungsgemäßen Vorrichtung 1, wobei in dem Außenluftkanal 5 ein Kombinationsfilter angeordnet ist, das neben einem Partikelfilter 6 einen Zyklon-Abscheider 23 aufweist. Der Zyklon-Abscheider 23 dient beispielsweise zur Abscheidung gröberer Verunreinigung, die beispielsweise im Zusammenhang mit dem Kohleabbau auftreten können.

Darüber hinaus ist erkennbar, dass der Fortluftkanal 13 verzweigt ist und sowohl vom Innenraum als auch vom Klimagerät 10 aus zur Fortluftöffnung 12 führt. Darüber hinaus ist erkennbar, dass das Wetterschutzgitter 4 als beheizbares Wetterschutzgitter ausgeführt ist, so dass das Abschmelzen von Schnee und Eis ermöglicht ist.

Figur 8 zeigt das Ausführungsbeispiel gemäß Figur 7, wobei jedoch wieder eine Fortluftklappe 18 sowie ein Druckschutzventilator 17 in einem Überbrückungskanal 22 vorgesehen sind, so dass die Funktion Druckschutz bereitgestellt ist.

## Patentansprüche

1. Vorrichtung (1) zur Vorbehandlung von Luft für den Innenraum (21) eines Führerstandes eines schienengeführten Triebfahrzeuges **gekennzeichnet durch**
- ein Lufteingangsgehäuse (2), das eine Außenluftöffnung (2a) und eine Klimageräteöffnung (15) mit Mitteln zum Befestigen des Lufteingangsgehäuses (2) an einem Klimagerät (10) aufweist, wobei ein Außenluftkanal (5), zum Verbinden des Lufteingangsgehäuses (2) mit dem Klimagerät (10) eingerichtet ist, und
- ein separates Luftausgangsgehäuse (3), das über eine Fortluftöffnung (12) verfügt und das über einen Fortluftkanal (13) mit dem Innenraum (2) und/oder dem Klimagerät (10) verbunden ist, wobei sich ein den Außenluftkanal (5) überbrückender Bypasskanal (9) zwischen dem Klimagerät (10) und der Klimageräteöffnung (15) erstreckt, in dem eine mit einem Stellmotor verbundene Luftklappe (16) angeordnet ist, und wobei das Lufteingangsgehäuse (2) aus einem formstabilen Material besteht, so dass feste Schnittstellen zum Klimagerät (10) und zur Außenwand des Triebfahrzeuges definiert sind.

2. Vorrichtung (1) nach Anspruch 1,
**dadurch gekennzeichnet, dass** der Außenluftkanal (5) über eine Filtereinheit (6) und einen Zusatzlüfter (7) verfügt.

3. Vorrichtung (1) nach Anspruch 2,
**dadurch gekennzeichnet, dass** der Zusatzlüfter (7) und die Filtereinheit (6) an dem Lufteingangsgehäuse (2) befestigt sind.

4. Vorrichtung (1) nach einem der vorhergehenden Ansprüche, **dadurch gekennzeichnet, dass** das Lufteingangsgehäuse (2) Mittel zum Befestigen an dem Triebfahrzeug aufweist.

5. Vorrichtung (1) nach einem der vorhergehenden Ansprüche, **dadurch gekennzeichnet, dass** das Fortluftgehäuse (3) aus einem formstabilen Material besteht.

6. Vorrichtung (1) nach einem der vorhergehenden Ansprüche, **dadurch gekennzeichnet, dass** der Fortluftkanal (13) eine Fortluftklappe (18) mit einem Stellmotor aufweist, wobei ein Überbrückungskanal (22) mit einem Druckschutzventilator (17) die Fortluftklappe (18) überbrückt.

7. Vorrichtung (1) nach einem der vorhergehenden Ansprüche, **dadurch gekennzeichnet, dass** der Außenluftkanal (5) zwischen dem Klimagerät (10) und der Luftklappe(16) in den Bypasskanal (9) mündet.

8. Vorrichtung (1) nach einem der Ansprüche 2 bis 7, **dadurch gekennzeichnet, dass** die Filtereinheit einen Zyklon-Abscheider (23) und einen Feinpartikelfilter (6) umfasst.

9. Vorrichtung (1) nach einem der vorhergehenden Ansprüche, **dadurch gekennzeichnet, dass** ein Wetterschutzgitter (4) an der Außenluftöffnung (2a) und/oder an der Fortluftöffnung (12) angebracht ist.

10. Vorrichtung (1) nach einem der vorhergehenden Ansprüche, **dadurch gekennzeichnet, dass** wenigstens eines der Wetterschutzgitter (4) beheizbar ist.

11. Vorrichtung (1) nach einem der Ansprüche 2 bis 7, **dadurch gekennzeichnet, dass** der Zusatzlüfter (7) eine konstante Kennlinie in Abhängigkeit des statischen Druckes aufweist, so dass die Anordnung des Lufteingangsgehäuses (2) an der Frontseite des Triebfahrzeuges ermöglicht ist.

## Claims

1. Device (1) for the pretreatment of air for the interior (21) of a driver's cab of a rail-guided traction vehicle, **characterized by**
- an air inlet housing (2) which has an external air opening (2a) and an air conditioning device opening (15) with means for attaching the air inlet housing (2) to an air conditioning device (10), wherein an external air duct (5) is configured to connect the air inlet housing (2) to the air conditioning device (10), and
- a separate air outlet housing (3) which has an exhaust air opening (12) and which is connected via an exhaust air duct (13) to the interior (21) and/or to the air conditioning device (10), wherein a bypass duct (9), which bypasses the external air duct (5) and in which an air flap (16) which is connected to a servo motor is arranged, extends between the air conditioning device (10) and the air conditioning device opening (15), and wherein the air inlet housing (2) is composed of a dimensionally stable material, with the result that fixed interfaces with the air conditioning device (10) and with the external wall of the traction vehicle are defined.

2. Device (1) according to Claim 1,
**characterized in that** the external air duct (5) has a filter unit (6) and an additional fan (7).

3. Device (1) according to Claim 2,
**characterized in that** the additional fan (7) and the filter unit (6) are attached to the air inlet housing (2).

4. Device (1) according to one of the preceding claims, **characterized in that** the air inlet housing (2) has means for attachment to the traction vehicle.

5. Device (1) according to one of the preceding claims, **characterized in that** the exhaust air housing (3) is composed of a dimensionally stable material.

6. Device (1) according to one of the preceding claims, **characterized in that** the exhaust air duct (13) has an exhaust air flap (18) having a servo motor, wherein a bypass duct (22) having a pressure protection blower (17) bypasses the exhaust air flap (18).

7. Device (1) according to one of the preceding claims, **characterized in that** the external air duct (5) opens into the bypass duct (9) between the air conditioning device (10) and the air flap (16).

8. Device (1) according to one of Claims 2 to 7, **characterized in that** the filter unit comprises a cyclone precipitator (23) and a fine particle filter (6).

9. Device (1) according to one of the preceding claims, **characterized in that** a weather protection grille (4) is attached to the external air opening (2a) and/or to the exhaust air opening (12).

10. Device (1) according to one of the preceding claims, **characterized in that** at least one of the weather protection grilles (4) can be heated.

11. Device (1) according to one of Claims 2 to 7, **characterized in that** the additional fan (7) has a constant characteristic curve as a function of the static pressure, which permits the air inlet housing (2) to be arranged on the front side of the traction vehicle.

## Revendications

1. Dispositif ( 1 ) de prétraitement d'air pour l'intérieur ( 21 ) d'un véhicule moteur guidé sur rail, **caractérisé par**
- un caisson ( 2 ) d'entrée de l'air, qui a une ouverture ( 2a ) pour de l'air extérieur et une ouverture ( 15 ) pour un appareil de conditionnement d'air comprenant des moyens de fixation du caisson ( 2 ) d'entrée de l'air à un appareil ( 10 ) de conditionnement d'air, un canal ( 5 ) pour de l'air extérieur étant prévu pour relier le caisson ( 2 ) d'entrée de l'air à l'appareil ( 1 ) de conditionnement d'air, et
- un caisson ( 3 ) distinct de sortie de l'air, qui dispose d'une ouverture ( 12 ) d'acheminement de l'air et qui est relié par un canal ( 13 ) d'acheminement de l'air à l'intérieur ( 2 ) et/ou à l'appareil ( 10 ) de conditionnement d'air, un canal ( 9 ) de dérivation court-circuitant le canal ( 5 ) pour de l'air extérieur et s'étendant entre l'appareil ( 10 ) de conditionnement d'air et l'ouverture ( 15 ) de l'appareil de conditionnement d'air, canal ( 9 ) de dérivation dans lequel est monté un volet ( 16 ) pour de l'air relié à un moteur d'actionnement et dans lequel le caisson ( 2 ) d'entrée pour de l'air est en un matériau d'une forme stable de manière à définir des interfaces fixes avec l'appareil ( 10 ) de conditionnement d'air et avec la paroi extérieure du véhicule moteur.

2. Dispositif ( 1 ) suivant la revendication 1,
**caractérisé en ce que** le canal ( 5 ) pour de l'air extérieur dispose d'un groupe ( 6 ) de filtration et d'un ventilateur ( 7 ) supplémentaire.

3. Dispositif ( 1 ) suivant la revendication 2,
**caractérisé en ce que** le ventilateur ( 7 ) supplémentaire et le groupe ( 6 ) de filtration sont fixés au caisson ( 2 ) d'entrée pour de l'air.

4. Dispositif ( 1 ) suivant l'une des revendications précédentes,
**caractérisé en ce que** le caisson ( 2 ) d'entrée pour de l'air a des moyens de fixation au véhicule moteur.

5. Dispositif ( 1 ) suivant l'une des revendications précédentes,
**caractérisé en ce que** le caisson ( 3 ) d'acheminement de l'air est en un matériau de forme stable.

6. Dispositif ( 1 ) suivant l'une des revendications précédentes,
**caractérisé en ce que** le canal ( 13 ) d'acheminement de l'air comporte un volet ( 18 ) d'acheminement de l'air, un canal ( 22 ) de court-circuitage ayant un ventilateur ( 17 ) de protection vis-à-vis de la pression court-circuitant le volet ( 18 ) d'acheminement de l'air.

7. Dispositif ( 1 ) suivant l'une des revendications précédentes,
**caractérisé en ce que** le canal ( 5 ) pour de l'air extérieur débouche entre l'appareil ( 10 ) de conditionnement d'air et le volet ( 16 ) pour de l'air dans le canal ( 9 ) de dérivation.

8. Dispositif ( 1 ) suivant l'une des revendications 2 à 7, **caractérisé en ce que** le groupe de filtration comprend un séparateur ( 23 ) cyclone et un filtre ( 6 ) de particules fines.

9. Dispositif ( 1 ) suivant l'une des revendications précédentes,
**caractérisé en ce qu'**une grille ( 4 ) de protection est mise sur l'ouverture ( 2a ) pour l'air extérieur et/ou sur l'ouverture ( 12 ) pour l'acheminement de l'air.

10. Dispositif ( 1 ) suivant l'une des revendications précédentes,
**caractérisé en ce qu'**au moins l'une des grilles ( 4 ) de protection peut être chauffée.

11. Dispositif ( 1 ) suivant l'une des revendications 2 à 7, **caractérisé en ce que** le ventilateur ( 7 ) supplémentaire a une caractéristique constante en fonction de la pression statique de manière à rendre possible de mettre le caisson ( 2 ) pour l'entrée de l'air sur le côté avant du véhicule moteur.
